# EUROPÄISCHE PATENTSCHRIFT

(11) **EP 3 628 508 B1**
(45) Veröffentlichungstag und Bekanntmachung des Hinweises auf die Patenterteilung: **22.03.2023**
(21) Anmeldenummer: 19199759.2
(22) Anmeldetag: 26.09.2019
(51) Int. Cl.: B60B 7/00, B60B 7/20

(54) **RADNABENABDECKUNG**
WHEEL HUB COVER
RECOUVREMENT DE MOYEU DE ROUE

(30) Priorität: 27.09.2018 DE 202018004505 U
(43) Veröffentlichungstag der Anmeldung: 01.04.2020
(73) Patentinhaber: ROTECH Antriebselemente GmbH, 76275 Ettlingen (DE)
(72) Erfinder: Peters, Heinz, 76275 Ettlingen (DE)
(74) Vertreter: Petersen, Frank

(56) Entgegenhaltungen:
- EP-A1- 2 607 096
- DE-A1- 3 919 268
- US-A- 2 869 262
- US-A- 5 659 989

## Beschreibung

Die Erfindung betrifft eine Nabenabdeckung für ein Rad eines Fahrzeuges, insbesondere eines Kraftfahrzeuges, mit einer am Rad zu befestigenden Halteeinrichtung, an der um eine Drehachse drehbar ein Trägerelement zur Aufnahme eines Zierkörpers gelagert ist, wobei zwischen Trägerelement und Halteeinrichtung in Radialrichtung ein nach außen offener Spalt verläuft.

Eine Vorrichtung dieser Art ist beispielsweise bekannt durch die EP 2 607 096. Ein Gegenstand gemäß diesem älteren Stand der Technik zeichnet sich insbesondere durch einen zur Drehachse konzentrischen Absatz an der Halteeinrichtung oder dem Trägerelement aus mit einer zu diesem Absatz komplementären Form des jeweiligen Gegenstückes.

Der Absatz zusammen mit der komplementären Form des Gegenstücks ist dabei wesentlich, da er Schmutzpartikel daran hindern soll, zu einem Drehlager an der Drehachse zu gelangen. Einzelne Schmutzpartikel, die bis zu diesem Absatz gelangen, sollen von diesem aufgehalten werden und werden durch die Drehbewegung der Halteeinrichtung und/oder des Trägerelements insbesondere aufgrund von Fliehkräften radial nach außen aus dem Spalt heraustransportiert, so dass die Nabenabdeckung sich bei Bewegung des Rades selbsttätig reinigen soll.

Es hat sich jetzt aber herausgestellt, dass Schmutzpartikel, die auch eine im Wesentlichen ungleichmäßige, insbesondere nicht kugelige Form haben, sich in dem Spalt verklemmen können. Dies führt zu einer Funktionsstörung der Nabenabdeckung, so dass ihr Hauptzweck, nämlich das Logo eines Fahrzeug- oder Felgenherstellers, das auf dem Zierkörper angebracht ist, immer in einer gleichen aufrechten Position anzuzeigen, nicht sicher gewährleistet ist.

Weitere vergleichbare Vorrichtungen sind außerdem bekannt aus der US 2 869 262 A, der US 5 659 989 A1 oder der DE 39 19 268 A1.

Aufgabe der vorliegenden Erfindung ist es daher, eine Vorrichtung wie oben beschrieben derart weiter zu bilden, dass sie unempfindlicher gegen das Eindringen von Schmutzpartikeln wird.

Diese Aufgabe wird erfindungsgemäß dadurch gelöst, dass sich der Spalt in Radialrichtung nach außen kontinuierlich erweitert.

Die Erfindung hat den Vorteil, dass Schmutzpartikel, die sich in Radialrichtung auf die Drehachse zubewegen, bei einem Kontakt mit den Seitenwänden des Spaltes abgebremst werden und sich anschließend nur noch nach außen, aufgrund des sich zur Drehachse hin verjüngenden Spaltes aber nicht weiter nach innen bewegen können. Das Austragen von Schmutzpartikeln aus dem Spalt heraus wird auf diese Art und Weise deutlich verbessert.

Bei einer bevorzugten Ausführungsform der Erfindung sind die Seitenwände des Spaltes im Wesentlichen geradlinig ausgebildet. Eine derartige Vorrichtung ist insbesondere fertigungstechnisch von Vorteil.

Bei einer alternativen Ausführungsform hat zumindest eine Seitenwand des Spaltes eine konvexe Form. Hierdurch werden größere Schmutzpartikel bereits überproportional weiter außen von einem Eindringen in den Spalt bis zur Drehachse gehindert, was die Betriebssicherheit des Bauelementes verbessert.

In Umfangsrichtung kann wenigstens eine der Seitenwände des Spaltes mit einer den Spalt in Umfangsrichtung abwechselnd erweiternden und verjüngenden Form versehen sein. Dies führt dazu, dass bei einer Rotation der Halteeinrichtung oder des Trägerelementes in dem sich verjüngenden Bereich zwischen diesen befindliche Partikel von den Seitenwänden ergriffen und in den sich erweiternden Bereich transportiert werden, von wo sie dann leicht nach außen abgeschleudert werden können.

Die sich verengende oder verjüngende Kontur kann dabei bedarfsweise wellenförmig oder aber auch sägezahnartig ausgestaltet werden. Die sich durch diese Kontur an den Seitenwänden ergebenden Erhöhungen und Vertiefungen haben einen im Wesentlichen radialen Verlauf, so dass sich in der Frontalansicht der Seitenwände ein strahlenförmiges Muster ergibt.

Weitere Vorteile und Merkmale der Erfindung ergeben sich aus der nachfolgenden Beschreibung eines Ausführungsbeispiels. Dabei zeigt:
- Fig. 1: Schnittansicht durch eine erfindungsgemäße Nabenabdeckung;
- Fig. 2: Schnittansicht durch eine alternative Ausführungsform der Nabenabdeckung;
- Fig. 3: Schnittansicht entlang der Linie III-III in Fig. 1;
- Fig. 4: Schnittansicht einer alternativen Ausführungsform entlang der Linie III-III in Fig. 1.

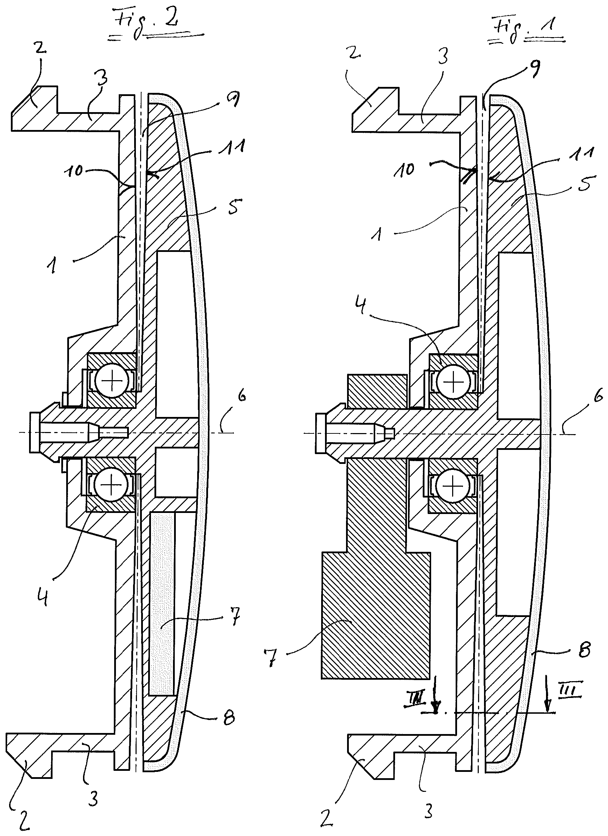

In der Fig. 1 erkennt man den Längsschnitt durch eine Nabenabdeckung für das Rad eines Fahrzeuges.

Eine Halteeinrichtung 1, die im Wesentlichen kreisrund ist, hat benachbart zu ihrem äußeren Umfang mehrere mit Rastnasen 2 versehene im Wesentlichen senkrecht vorspringende Haltearme 3. Über diese Haltearme 3 wird die Halteeinrichtung 1 in einer korrespondierenden Ausnehmung im Bereich der Nabe eines Rades fixiert. Sobald das Rad in eine rotierende Bewegung kommt, wird die Halteeinrichtung 1 mitrotiert.

In ihrem zentrischen mittleren Bereich ist an der Halteeinrichtung 1 über ein Kugellager 4 als Drehlager ein Trägerelement 5 verdrehbar gelagert, wobei die entsprechende Drehachse 6 des Kugellagers mit der Drehachse des (hier nicht dargestellten) Rades überstimmt, an dem die Halteeinrichtung 1 befestigt ist. Der Vollständigkeit halber sei erwähnt, dass das Drehlager grundsätzlich auch als Gleitlager ausgebildet sein kann oder als eine andere Art von Wälzlager. Besonders bevorzugt wird aber ein Hochleistungskugellager mit nichtschleifender Dichtung aus Edelstahl, das besonders betriebssicher ist.

Das Trägerelement ist drehfest mit einem Gewicht 7 verbunden, dessen Schwerpunkt exzentrisch zur Drehachse 6 liegt. Dadurch wird erreicht, dass bei einer Rotation der Halteeinrichtung 1 das Trägerelement 5 in einer im Wesentlichen aufrechten gleichbleibenden Position verbleibt, sich also nicht mitdreht. Dadurch besteht die Möglichkeit, das Trägerelement 5 auf seiner der Halteeinrichtung 1 abgewandten Seite mit einem Zierkörper 8 zu versehen, der beispielsweise das Logo eines Fahrzeug- oder Felgenherstellers trägt. Bei einer Drehung des Rades bleibt dieses Logo dann immer in der gleichen, aufrechten Stellung, dreht sich also nicht mit. Der Zierkörper 8 kann dabei bedarfsweise auch als Bedruckung des Trägerelementes 5 ausgebildet sein, als bedrucktes Folienelement etc.

Zwischen dem Trägerelement 5 und der Halteeinrichtung 1 befindet sich ein Spalt 9, so dass das Trägerelement 5 und die Halteeinrichtung 1 räumlich voneinander getrennt sind und nicht aneinander reiben.

Da Fahrzeugräder auch Verschmutzungen in Form von Staub, Matsch, Sand etc. ausgesetzt sind, soll sichergestellt sein, dass in den Spalt 9 gelangende Verschmutzungen nicht bis zum Kugellager 4 gelangen. Dies gilt auch dann, wenn dieses Kugellager wie oben angesprochen als Hochleistungskugellager mit einer nichtschleifenden Dichtung versehen ist. Um dies zu erreichen, ist der nach außen offene Spalt 9 sich nach außen kontinuierlich erweiternd ausgebildet.

Im hier dargestellten Beispiel sind die Seitenwände 10 und 11 des Spaltes dafür beide als flache Kegelscheiben ausgebildet.

Es ist aber auch im Rahmen der Erfindung, wenn lediglich eine der beiden Seitenflächen 10 oder 11 eine derartige flache kegelscheibenartige Form hat.

Außer einer linear gradlinig verlaufenden Kegelfläche ist auch eine konvexe Form der Seitenwände 10 und/oder 11 möglich. Auch hier können sowohl beide als auch nur eine Seitenwand entsprechend konvex ausgestaltet sein. Wesentlich ist, dass der Spalt 9 zwischen den Seitenwänden 10 und 11 nach außen eine divergente Form hat.

Diese divergente Form hat den Vorteil, dass Schmutzpartikel beim Eindringen in den Spalt 9 spätestens abgefangen werden, wenn sie in den Bereich kommen, in dem die lichte Weite des konvergenten Spaltes 9 den Abmessungen des Schmutzpartikels entspricht. Der Schmutzpartikel wird damit in seiner radialen Bewegung abgebremst und kann dann leicht wieder nach außen abgeschleudert werden.

In der Fig. 2 sind gleiche Teile mit gleichen Bezugszeichen versehen. Als wesentlicher Unterschied ist zu sehen, dass das Gewicht 7 in das Trägerelement 5 integriert ist, so dass der für die Nabenabdeckung benötigte Bauraum verringert wird.

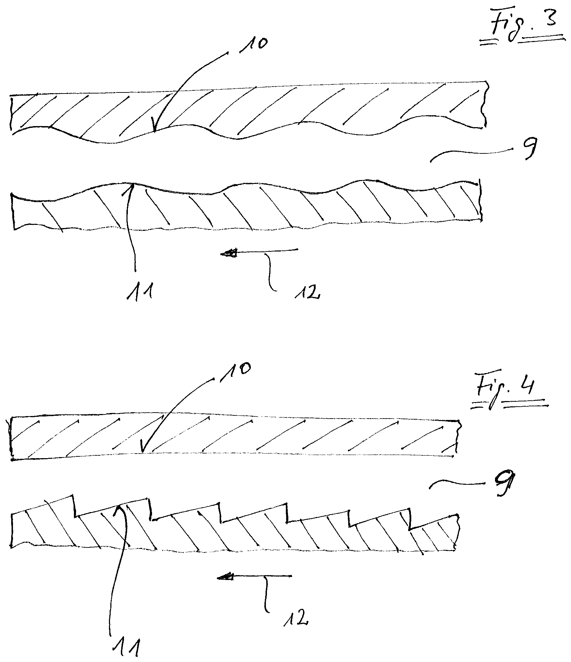

In der Fig. 3 ist noch eine Schnittansicht dargestellt, in der der Spalt 9 in der Aufsicht zu erkennen ist. Man sieht, dass die Seitenwände 10 bzw. 11 an den einander zugewandten Seiten mit einem wellenartigen Profil versehen sind. In der Frontalansicht der Seitenwände ergibt sich durch die demgemäß vorhandenen Erhöhungen und Vertiefungen ein strahlenförmiges Muster. Dadurch, dass sich lediglich eine der beiden Seitenwände entsprechend dem Pfeil 12 bewegt, verengt und erweitert sich an einer beliebigen Stelle die lichte Weite des Spaltes 9, so dass sich an dieser Stelle bei sich verengendem Spalt Schmutzpartikel fangen. In der sich anschließenden Phase der Erweiterung des Spaltes kann dieser Schmutz dann leichter wieder aus dem Spalt herausgeschleudert werden.

In der Fig. 4 ist diesbezüglich eine alternative Ausführungsform dargestellt, bei der lediglich eine Seitenwand 11 mit einem im Wesentlichen sägezahnförmigen Profil versehen ist. Auch hier hat die Seitenfläche in der Frontalansicht somit ein strahlenförmiges Muster. Des Weiteren wird auch hier bei Rotation einer mit diesem Profil versehen Seitenwand entsprechend dem Pfeil 12 sich die lokale Weite des Spaltes dem Sägezahnprofil folgend verändern, so dass in diesen Spalt geratender Schmutz zunächst abgebremst und anschließend in dem sich wieder erweiternden Bereich nach außen abgeschleudert werden kann.

Insgesamt gibt die vorliegende Erfindung somit die Möglichkeit, die Betriebssicherheit einer Nabenabdeckung mit einem rotierenden Trägerelement deutlich zu erhöhen.

### Bezugszeichenliste

- 1: Halteeinrichtung
- 2: Rastnase
- 3: Haltearme
- 4: Kugellager
- 5: Trägerelement
- 6: Drehachse
- 7: Gewicht
- 8: Zierkörper
- 9: Spalt
- 10: Seitenwand
- 11: Seitenwand
- 12: Pfeil

## Patentansprüche

1. Nabenabdeckung für ein Rad eines Fahrzeuges, insbesondere eines Kraftfahrzeuges, mit einer am Rad zu befestigenden Halteeinrichtung (1), an der um eine Drehachse (6) drehbar ein Trägerelement (5) zur Aufnahme eines Zierkörpers (8) gelagert ist, wobei zwischen Trägerelement (5) und Halteeinrichtung (1) in Radialrichtung ein nach außen offener Spalt (9) verläuft,
**dadurch gekennzeichnet,**
**dass** sich der Spalt (9) in Radialrichtung nach außen kontinuierlich erweitert.

2. Nabenabdeckung gemäß Anspruch 1,
**dadurch gekennzeichnet,**
**dass** die Seitenwände (10, 11) des Spaltes (9) im Wesentlichen gradlinig ausgebildet sind.

3. Nabenabdeckung gemäß Anspruch 1,
**dadurch gekennzeichnet,**
**dass** mindestens eine Seitenwand (10, 11) des Spaltes (9) eine konvexe Form hat.

4. Nabenabdeckung gemäß einem oder mehreren der vorhergehenden Ansprüche,
**dadurch gekennzeichnet,**
**dass** in Umfangsrichtung wenigstens eine der Seitenwände (10, 11) mit einer den Spalt in Umfangsrichtung abwechselnd erweiternden und verjüngenden Form versehen ist.

5. Nabenabdeckung gemäß Anspruch 4,
**dadurch gekennzeichnet,**
**dass** die Form wellenförmig ist.

6. Nabenabdeckung gemäß Anspruch 4,
**dadurch gekennzeichnet,**
**dass** die Form sägezahnförmig ist.

## Claims

1. Hub cover for a wheel of a vehicle, in particular of a motor vehicle, with a holding device (1) which is to be fastened to the wheel and on which a support element (5) for receiving a decorative body (8) is mounted so as to be rotatable about an axis of rotation (6), wherein an outwardly open gap (9) runs in the radial direction between the support element (5) and the holding device (1),
**characterized in that**
the gap (9) expands continuously outwards in the radial direction.

2. Hub cover according to Claim 1,
**characterized in that**
the side walls (10, 11) of the gap (9) are substantially rectilinear.

3. Hub cover according to Claim 1,
**characterized in that**
at least one side wall (10, 11) of the gap (9) has a convex shape.

4. Hub cover according to one or more of the preceding claims,
**characterized in that**
in the circumferential direction at least one of the side walls (10, 11) is provided with a shape alternately expanding and tapering the gap in the circumferential direction.

5. Hub cover according to Claim 4,
**characterized in that**
the shape is undulating.

6. Hub cover according to Claim 4,
**characterized in that**
the shape is serrated.

## Revendications

1. Recouvrement de moyeu pour une roue d'un véhicule, notamment d'un véhicule automobile, avec un dispositif de maintien (1) à fixer sur la roue, sur lequel est monté, de manière rotative autour d'un axe de rotation (6), un élément porteur (5) pour recevoir un corps décoratif (8), une fente (9) ouverte vers l'extérieur s'étendant dans la direction radiale entre l'élément porteur (5) et le dispositif de maintien (1),
**caractérisé en ce que**
la fente (9) s'élargit en continu vers l'extérieur dans la direction radiale.

2. Recouvrement de moyeu selon la revendication 1,
**caractérisé en ce que**
les parois latérales (10, 11) de la fente (9) sont configurées sous forme essentiellement rectilignes.

3. Recouvrement de moyeu selon la revendication 1,
**caractérisé en ce qu'**au
moins une paroi latérale (10, 11) de la fente (9) a une forme convexe.

4. Recouvrement de moyeu selon une ou plusieurs des revendications précédentes,
**caractérisé en ce que**,
dans la direction circonférentielle, au moins une des parois latérales (10, 11) est pourvue d'une forme qui élargit et rétrécit alternativement la fente dans la direction circonférentielle.

5. Recouvrement de moyeu selon la revendication 4,
**caractérisé en ce que**
la forme est ondulée.

6. Recouvrement de moyeu selon la revendication 4,
**caractérisé en ce que**
la forme est en dent de scie.
